# EUROPÄISCHE PATENTANMELDUNG

(11) **EP 4 186 631 A1**
(43) Veröffentlichungstag der Anmeldung: **31.05.2023**
(21) Anmeldenummer: 21211087.8
(22) Anmeldetag: 29.11.2021
(51) Int. Cl.: B23K 11/30, G01P 13/04

(54) **ANTRIEBSVORRICHTUNG FÜR EIN SCHWEISSELEKTRODENKAPPENFRÄSWERKZEUG ODER EIN SCHWEISSELEKTRODENKAPPENWECHSLERWERKZEUG UND EIN VERFAHREN**

(71) Anmelder: Lutz Precision, s.r.o., 84104 Bratislava (SK)
(72) Erfinder: SPERBER, Rudolf, Bratislava 841 04 (SK)
(74) Vertreter: Grünecker Patent- und Rechtsanwälte PartG mbB

(57) **Zusammenfassung**

Die Erfindung betrifft eine Antriebsvorrichtung (1, 23) für ein Schweißelektrodenkappenfräswerkzeug oder ein Schweißelektrodenkappenwechslerwerkzeug umfassend: einen Antriebsmotor (2, 24) mit einer Werkzeugaufnahme (4, 26); zwei zueinander beabstandete, sich über verschieden große Bereiche in der Werkzeugaufnahme erstreckende metallische Elemente (7, 8, 29, 30); und mindestens einen Sensor (9, 31, 32) zur Detektion von den zwei sich bei Drehung des Antriebsmotors in eine Drehrichtung (6, 16, 28, 45) an dem mindestens einen Sensor vorbeibewegenden metallischen Elementen und zur Ausgabe von Detektionssignalen (11-15, 18-22, 34-38, 40-44, 47-51, 53-57) basierend zumindest auf der Detektion. Weiter betrifft die Erfindung ein Verfahren, unter Verwendung der Antriebsvorrichtung, wobei das Verfahren Detektieren, mittels des mindestens einen Sensors, von den zwei sich bei Drehung des Antriebsmotors in eine Drehrichtung an dem mindestens einen Sensor vorbeibewegenden metallischen Elementen und Ausgeben, mittels des mindestens einen Sensors, von Detektionssignalen basierend zumindest auf dem Detektieren umfasst.

## Beschreibung

Die vorliegende Erfindung betrifft eine Antriebsvorrichtung für ein Schweißelektrodenfräswerkzeug oder ein Schweißelektrodenkappenwechslerwerkzeug gemäß Anspruch 1 und ein Verfahren gemäß Anspruch 15.

### Stand der Technik

Aus dem Gebiet der Schweißroboter, insbesondere in der Automobilherstellung, ist bekannt, dass Schweißroboter einen computergesteuerten Roboterarm mit einer Punktschweißzange umfassen, die an den einander gegenüberliegenden Zangenenden je eine Schweißelektrodenkappen-Aufnahme aufweist, auf die jeweils eine Schweißelektrodenkappe aufsteckbar ist.

Zum Wechseln der Schweißelektrodenkappen sind Schweißelektrodenkappenwechslerwerkzeuge in Roboterschweißanlagen im Einsatz, mit denen die Schweißelektrodenkappen von einer als Haltekonus ausgebildeten Schweißelektrodenkappenhalterung gelöst werden können. Dazu kann eine Schweißelektrodenkappe von einer Aufnahme durch eine Drehbewegung automatisiert gelöst werden. Beispielsweise kann ein Stirnrad vorgesehen sein, in dessen zentrale Öffnung eine Schweißelektrodenkappe einbringbar ist. Auf einem Kreis um die Achse des Stirnrads können auf beidseitig vorstehenden Zapfen drei Spannbacken in gleichen Winkelabständen voneinander schwenkbar gelagert sein. Jede Spannbacke ist mit einer Zugfeder in Richtung auf die Schweißelektrodenkappe belastet, so dass bei Drehung des Stirnrads in der einen Richtung die Zugfedern die Spannbacken gegen die Schweißelektrodenkappe ziehen, wobei die Schweißelektrodenkappe während des Abziehens geklemmt und gehalten werden kann, und die Schweißelektrodenkappe von der Schweißzange abgezogen werden kann, während gleichzeitig das Geklemmt- und Gehaltenwerden der Schweißelektrodenkappe nachlässt. Wenn das Stirnrad nach Entfernen der Schweißzange aus dem Schweißelektrodenkappenwechslerwerkzeug in die andere Richtung gedreht wird, wird im Allgemeinen die Schweißelektrodenkappe komplett freigegeben.

DE 38 22 655 C1 offenbart eine Vorrichtung und ein Verfahren zum selbsttätigen Abziehen von Elektrodenkappen von Schweißelektrodenschäften.

Um Fremdmaterial von der Oberfläche einer Schweißelektrodenkappe, das sich bei Schweißvorgängen dort anlagert, zu entfernen, ist es bekannt, die Oberfläche der Schweißelektrodenkappe in gewissen Abständen mit einem Schweißelektrodenfräswerkzeug zu fräsen. Die Oberfläche der Schweißelektrodenkappe kann durch ein Drücken der Schweißelektrodenkappe gegen eine sich drehenden Schneide gefräst werden.

DE 100 16 148 B4 offenbart einen Elektrodenkappenfräser mit integrierter Spanausblaseinrichtung, insbesondere zum Kappenfräsen von Schweißkappen einer Schweißzange eines Schweißroboters im Automobilbau.

### Aufgabe

Ausgehend vom bekannten Stand der Technik besteht die zu lösende technische Aufgabe darin, eine Antriebsvorrichtung für ein Schweißelektrodenfräswerkzeug oder ein Schweißelektrodenkappenwechslerwerkzeug und ein Verfahren anzugeben, mit denen entsprechend zuverlässig gute Fräsergebnisse oder gute Wechselergebnisse erreichbar sind.

### Lösung

Diese Aufgabe wird erfindungsgemäß durch die Antriebsvorrichtung nach Anspruch 1 und das Verfahren nach Anspruch 15 gelöst. Weitere Ausführungsformen und Weiterbildungen sind in den abhängigen Ansprüchen erfasst.

Die Antriebsvorrichtung für ein Schweißelektrodenfräswerkzeug oder ein Schweißelektrodenkappenwechslerwerkzeug umfasst einen Antriebsmotor, der eine Werkzeugaufnahme zur Aufnahme des Schweißelektrodenkappenfräswerkzeugs oder des Schweißelektrodenkappenwechslerwerkzeugs umfasst. Die Antriebsvorrichtung umfasst weiter zwei zueinander beabstandete, sich über verschieden große Bereiche in der Werkzeugaufnahme erstreckende metallische Elemente und mindestens einen Sensor zur Detektion von den zwei sich bei Drehung des Antriebsmotors in eine Drehrichtung an dem mindestens einen Sensor vorbeibewegenden metallischen Elementen und zur Ausgabe von Detektionssignalen basierend zumindest auf der Detektion.

Eine Erkennung und/oder eine Überwachung einer Drehrichtung des Antriebsmotors trägt im Falle eines Schweißelektrodenfräswerkzeugs zu guten Fräsergebnissen bei, da ein Fräsen mit falscher Drehrichtung des Antriebsmotors unterbunden werden kann, was zu Schäden an der Schneide und/oder der Schweißelektrodenkappe führen könnte.

Im Falle eines Schweißelektrodenkappenwechslerwerkzeugs kann zum Abziehen der Schweißelektrodenkappe zunächst eine Drehung im Uhrzeigersinn erforderlich sein, um eine Absaugeinheit zu schließen und die Schweißelektrodenkappe abzuziehen. Danach kann eine Drehung entgegen des Uhrzeigersinns erforderlich sein, damit sich die Abzieheinheit öffnen und die abgezogene Schweißelektrodenkappe herausfallen kann.

Durch die beiden zueinander beabstandete, sich über verschieden große Bereiche in der Werkzeugaufnahme erstreckende metallische Elemente ergibt sich bei einer Drehung des Antriebsmotors eine charakteristische Abfolge von Detektionssignalen, wenn sich die metallischen Elemente an dem mindestens einen Sensor vorbeibewegen.

Eine Drehung des Antriebsmotors kann als Links- oder als Rechtsdrehung um eine Drehachse des Antriebsmotors erfolgen.

Die zwei metallischen Elemente können entlang eines Kreisrings um die Werkzeugaufnahme des Motors angeordnet sein. Beispielsweise können sich die zwei metallischen Elemente über verschiedenen große Winkelbereiche erstrecken.

Eine Form der zwei metallischen Elemente kann jeweils einem Verlauf des Kreisrings entsprechen.

Die Werkzeugaufnahme kann ein Zahnrad umfassen, und die zwei metallischen Elemente können an einer Stirnseite des Zahnrads vorgesehen sein.

Die zwei metallischen Elemente können in Aussparungen der Stirnseite des Zahnrads eingepasst sein.

Die zwei metallischen Elemente können jeweils Nockenschalter umfassen.

Der mindestens eine Sensor kann als induktiver Sensor oder als Annäherungssensor ausgebildet sein. Induktive Sensoren und Annäherungssensoren arbeiten berührungslos und können Metallobjekte detektieren, die sich in ihr Messfeld bewegen. Ein Oszillator des Sensors erzeugt mittels eines Schwingkreises ein elektromagnetisches Wechselfeld, das aus der aktiven Fläche des Sensors austritt und mit einem passierenden Metallobjekt wechselwirkt.

Der mindestens eine Sensor kann radial zur Werkzeugaufnahme angeordnet sein.

Die Antriebsvorrichtung kann zwei Sensoren umfassen. Durch das Vorsehen von zwei Sensoren können mittels der Detektionssignale der Sensoren beispielsweise Geschwindigkeitsänderungen des Antriebsmotors besser erkennbare sein als wenn nur ein einziger Sensor vorgesehen ist. Die beiden Sensoren können zueinander einen Winkelabstand in einem Bereich zwischen 20° und 160° aufweisen.

Die Antriebsvorrichtung kann weiter eine Analysevorrichtung zur Auswertung der Detektionssignale und zum Ermitteln der Drehrichtung anhand einer zeitlichen Reihenfolge der aufeinanderfolgenden Detektionssignale umfassen. Aus den Detektionssignalen, die mittels des mindestens einen Sensors ermittelt und ausgegeben wurden, kann eine Drehrichtung des Antriebsmotors, die während einer Messung mittels des mindestens Sensors vorlag, ermittelt werden.

Die Analysevorrichtung kann ausgebildet sein, die ermittelte Drehrichtung mit einer vorgegebenen Solldrehrichtung zu vergleichen, um ein Vorliegen der vorgegebenen Solldrehrichtung oder ein Nicht-Vorliegen der vorgegebenen Sollvorrichtung des Antriebsmotors als Analyseergebnis auszugeben zu können. Falls die ermittelte Drehrichtung mit der Solldrehrichtung übereinstimmt, können keine weitere Handlung erforderlich sein. Der Antriebsmotor kann weiterhin auf die Art und Weise betrieben werden wie während der Messung mittels des mindestens Sensors. Falls die ermittelte Drehrichtung mit der Solldrehrichtung nicht übereinstimmt, können weitere Handlung erforderlich sein. Beispielsweise kann eine Warnmeldung erfolgen, dass die ermittelte Drehrichtung nicht mit der Solldrehrichtung übereinstimmt. Zudem oder alternativ kann ein Steuerungssignal ausgegeben werden, das den Antriebsmotor stoppt; beispielweise kann danach ein Anfahren des Antriebsmotors mit der Solldrehrichtung erfolgen.

Die Analysevorrichtung kann zwei Ausgänge umfassen.

Die Analysevorrichtung kann ausgebildet sein, anhand des Analyseergebnisses einen oder beide der zwei Ausgänge zu aktivieren oder zu deaktivieren. So kann, falls die ermittelte Drehrichtung mit der Solldrehrichtung nicht übereinstimmt, ein Steuerungssignal ausgegeben werden, das den Antriebsmotor stoppt; beispielweise kann danach ein Anfahren des Antriebsmotors mit der Solldrehrichtung erfolgen.

Das Verfahren, unter Verwendung der Antriebsvorrichtung, wie oben oder weiter unten beschrieben, zur Detektion von den zwei sich bei Drehung des Antriebsmotors in eine Drehrichtung an dem mindestens einen Sensor vorbeibewegenden metallischen Elementen und zur Ausgabe von Detektionssignalen basierend zumindest auf der Detektion, wobei das Verfahren umfasst:
- Detektieren, mittels des mindestens einen Sensors, von den zwei sich bei Drehung des Antriebsmotors in eine Drehrichtung an dem mindestens einen Sensor vorbeibewegenden metallischen Elementen und
- Ausgaben, mittels des mindestens einen Sensors, von Detektionssignalen basierend zumindest auf dem Detektieren.

### Kurze Figurenbeschreibung

Die beigefügten Figuren stellen beispielhaft zum besseren Verständnis und zur Veranschaulichung Aspekte und Ausführungsformen der Erfindung dar. Es zeigt:
Figur 1A eine schematische Ansicht einer ersten Ausführungsform einer Antriebsvorrichtung für ein Schweißelektrodenfräswerkzeug oder ein Schweißelektrodenkappenwechslerwerkzeug bei Rechtsdrehung;
Figur 1B ein Detektionssignal-Zeit-Diagramm des Sensors der Antriebsvorrichtung bei Rechtsdrehung;
Figur 2A eine schematische Ansicht der ersten Ausführungsform der Antriebsvorrichtung für ein Schweißelektrodenfräswerkzeug oder ein Schweißelektrodenkappenwechslerwerkzeug bei Linksdrehung;
Figur 2B ein Detektionssignal-Zeit-Diagramm des Sensors der Antriebsvorrichtung bei Linksdrehung;
Figur 3A eine schematische Ansicht einer zweiten Ausführungsform einer Antriebsvorrichtung für ein Schweißelektrodenfräswerkzeug oder ein Schweißelektrodenkappenwechslerwerkzeug bei Rechtsdrehung;
Figur 3B ein Detektionssignal-Zeit-Diagramm des ersten der beiden Sensoren der Antriebsvorrichtung bei Rechtsdrehung;
Figur 3C ein Detektionssignal-Zeit-Diagramm des zweiten Sensors der Antriebsvorrichtung bei Rechtsdrehung;
Figur 4A eine schematische Ansicht der zweiten Ausführungsform einer Antriebsvorrichtung für ein Schweißelektrodenfräswerkzeug oder ein Schweißelektrodenkappenwechslerwerkzeug bei Linksdrehung;
Figur 4B ein Detektionssignal-Zeit-Diagramm des ersten der beiden Sensoren der Antriebsvorrichtung bei Linksdrehung; und
Figur 4C ein Detektionssignal-Zeit-Diagramm des zweiten Sensors der Antriebsvorrichtung bei Linksdrehung.

### Ausführliche Beschreibung

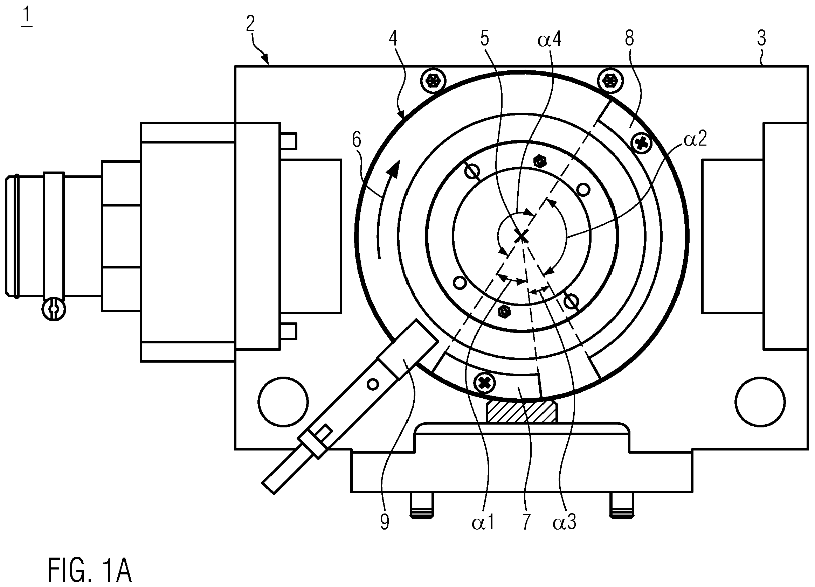

Die Figur 1A zeigt eine schematische Ansicht einer ersten Ausführungsform einer Antriebsvorrichtung 1 für ein Schweißelektrodenfräswerkzeug oder ein Schweißelektrodenkappenwechslerwerkzeug. In der Darstellung umfasst die Antriebsvorrichtung 1 einen Antriebsmotor 2, der in einem Gehäuse 3 angeordnet ist und der eine Werkzeugaufnahme 4 zur Aufnahme des Schweißelektrodenkappenfräswerkzeugs oder des Schweißelektrodenkappenwechslerwerkzeugs umfasst. Die Werkzeugaufnahme 4 kann sich innerhalb des Kreisbereichs erstrecken. Eine Drehung des Antriebsmotors 2 kann um eine Drehachse 5 erfolgen. In der Figur 1A ist eine Rechtsdrehung mittels des Pfeils 6 kenntlich gemacht.

Die Antriebsvorrichtung 1 umfasst weiter zwei zueinander beabstandete, sich über verschieden große Bereiche in der Werkzeugaufnahme 4 erstreckende metallische Elemente 7, 8. Das erste metallische Element 7 erstreckt sich über einen ersten Winkelbereich α1 und das zweite metallische Element 8 über einen zweiten Winkelbereich α2, wobei hier der erste Winkelbereich α1 kleiner als der zweite Winkelbereich α2 ist. Das erste metallische Element 7 und das zweite metallische Element 8 sind zueinander durch einen dritten Winkelbereich α3 beabstandet. In einem vierten Winkelbereich α3 ist ebenfalls kein metallisches Element angeordnet.

Die Antriebsvorrichtung 1 umfasst weiter einen Sensor 9 zur Detektion von den zwei sich bei Drehung des Antriebsmotors 2 in eine Drehrichtung an dem Sensor 9 vorbeibewegenden metallischen Elementen 7, 8 und zur Ausgabe von Detektionssignalen basierend zumindest auf der Detektion. In der Figur 1A ist der Sensor 9 radial zur Werkzeugaufnahme 4 angeordnet.

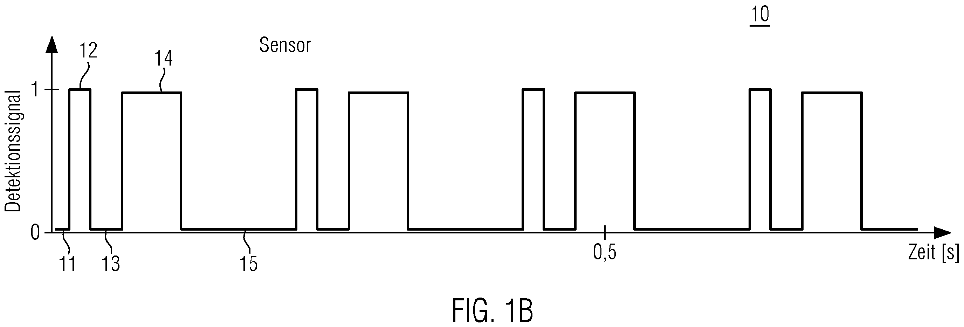

Die Figur 1B zeigt ein Detektionssignal-Zeit-Diagramm 10 des Sensors 9 der Antriebsvorrichtung 1 bei Rechtsdrehung um die Drehachse 5. Exemplarisch wurde eine Antriebsvorrichtung 1 mit einem Schweißelektrodenfräswerkzeug angenommen, das beispielsweise eine Drehzahl in einem Bereich von 300 Umdrehungen pro Minute aufweisen kann. Entsprechend der Figur 1A passiert zunächst das erste metallische Element 7 und dann das zweite metallische Element 8 den Sensor 9. In dem Detektionssignal-Zeit-Diagramm 10 entspricht ein Wert 0 (Null) des Detektionssignals, dass sich kein metallisches Element an dem Sensor 9 vorbeibewegt hat, und ein Wert 1 (Eins) des Detektionssignals, dass sich ein metallisches Element 7, 8 an dem Sensor 9 vorbeibewegt hat.

In dem dargestellten Detektionssignal-Zeit-Diagramm 10 weist das Detektionssignal 11 während einer ersten Zeitdauer, in der ein Teil des vierten Winkelbereichs α4 an dem Sensor 9 vorbeibewegt, den Wert Null auf. Während einer zweiten Zeitdauer, in der sich das erste metallische Element 7 mit dem ersten Winkelbereichs α1 an dem Sensor 9 vorbeibewegt, weist das Detektionssignal 12 den Wert Eins auf. Während einer dritten Zeitdauer, in der sich der dritte Winkelbereich α3 an dem Sensor 9 vorbeibewegt, weist das Detektionssignal 13 den Wert Null auf. Während einer vierten Zeitdauer, in der sich das zweite metallische Element 8 mit dem zweiten Winkelbereichs α2 an dem Sensor 9 vorbeibewegt, weist das Detektionssignal 14 den Wert Eins auf. Während einer fünften Zeitdauer, in der sich der vierte Winkelbereich α4 an dem Sensor 9 vorbeibewegt, weist das Detektionssignal 15 den Wert Null auf. Danach wiederholt sich der Ablauf.

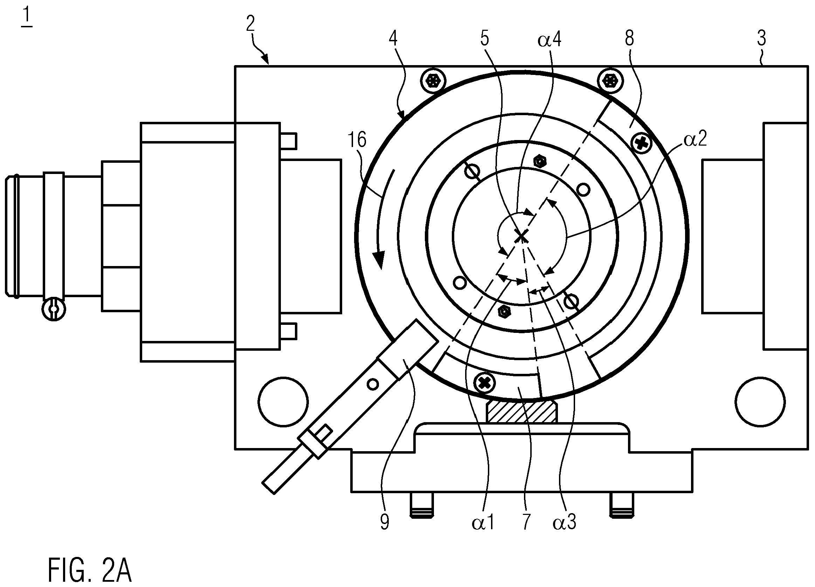

Die Figur 2A zeigt eine schematische Ansicht der ersten Ausführungsform der Antriebsvorrichtung 1 für ein Schweißelektrodenfräswerkzeug oder ein Schweißelektrodenkappenwechslerwerkzeug, die bereits hinsichtlich der Figur 1A beschrieben wurde, bei Linksdrehung. Die Linksdrehung des Antriebsmotors 2 um die Drehachse 5 ist mittels des Pfeils 16 kenntlich gemacht.

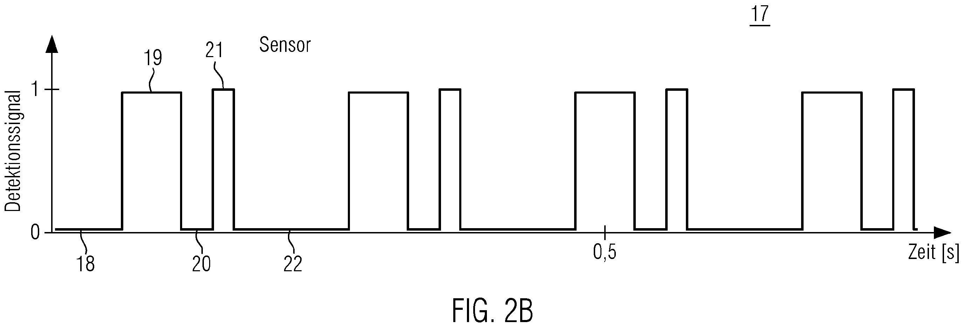

Die Figur 2B zeigt ein Detektionssignal-Zeit-Diagramm 17 des Sensors 9 der Antriebsvorrichtung 1 bei Linksdrehung um die Drehachse 5. Exemplarisch wurde wieder, wie in der Figur 1B, eine Antriebsvorrichtung 1 mit einem Schweißelektrodenfräswerkzeug angenommen. Entsprechend der Figur 2A passiert zunächst das zweite metallische Element 8 und dann das erste metallische Element 7 den Sensor 9.

In dem dargestellten Detektionssignal-Zeit-Diagramm 17 weist das Detektionssignal 18 während einer ersten Zeitdauer, in der sich ein Teil des vierten Winkelbereichs α4 an dem Sensor 9 vorbeibewegt, den Wert Null auf. Während einer zweiten Zeitdauer, in der sich das zweite metallische Element 8 mit dem zweiten Winkelbereichs α2 an dem Sensor 9 vorbeibewegt, weist das Detektionssignal 19 den Wert Eins auf. Während einer dritten Zeitdauer, in der sich der dritte Winkelbereich α3 an dem Sensor 9 vorbeibewegt, weist das Detektionssignal 20 den Wert Null auf. Während einer vierten Zeitdauer, in der sich das erste metallische Element 7 mit dem ersten Winkelbereich α1 an dem Sensor 9 vorbeibewegt, weist das Detektionssignal 21 den Wert Eins auf. Während einer fünften Zeitdauer, in der sich der vierte Winkelbereich α4 an dem Sensor 9 vorbeibewegt, weist das Detektionssignal 22 den Wert Null auf. Danach wiederholt sich der Ablauf.

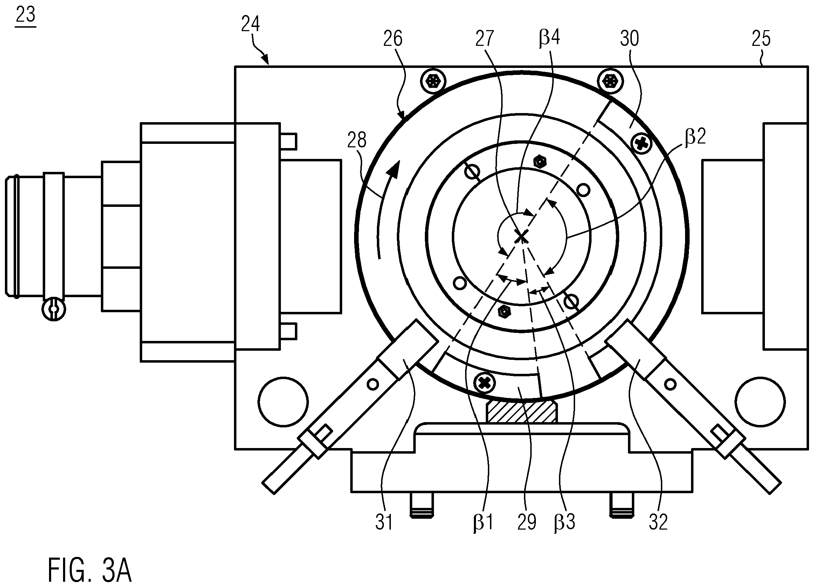

Figur 3A eine schematische Ansicht einer zweiten Ausführungsform einer Antriebsvorrichtung 23 für ein Schweißelektrodenfräswerkzeug oder ein Schweißelektrodenkappenwechslerwerkzeug bei Rechtsdrehung. In der Darstellung umfasst die Antriebsvorrichtung 23 einen Antriebsmotor 24, der in einem Gehäuse 25 angeordnet ist und der eine Werkzeugaufnahme 26 zur Aufnahme des Schweißelektrodenkappenfräswerkzeugs oder des Schweißelektrodenkappenwechslerwerkzeugs umfasst. Die Werkzeugaufnahme 26 kann sich innerhalb des Kreisbereichs erstrecken. Eine Drehung des Antriebsmotors 24 kann um eine Drehachse 27 erfolgen. In der Figur 3A ist eine Rechtsdrehung mittels des Pfeils 28 kenntlich gemacht.

Die Antriebsvorrichtung 23 umfasst weiter zwei zueinander beabstandete, sich über verschieden große Bereiche in der Werkzeugaufnahme 26 erstreckende metallische Elemente 29, 30. Das erste metallische Element 29 erstreckt sich über einen ersten Winkelbereich β1 und das zweite metallische Element 30 über einen zweiten Winkelbereich β2, wobei hier der erste Winkelbereich β1 kleiner als der zweite Winkelbereich β2 ist. Das erste metallische Element 29 und das zweite metallische Element 30 sind zueinander durch einen dritten Winkelbereich β3 beabstandet. In einem vierten Winkelbereich β3 ist ebenfalls kein metallisches Element angeordnet.

Die Antriebsvorrichtung 23 umfasst weiter zwei Sensoren 31, 32 zur Detektion von den zwei sich bei Drehung des Antriebsmotors 24 in eine Drehrichtung an den Sensoren 31, 32 vorbeibewegenden metallischen Elementen 29, 30 und zur Ausgabe von Detektionssignalen basierend zumindest auf der Detektion. In der Figur 3A sind die Sensoren 31, 32 radial zur Werkzeugaufnahme 26 angeordnet.

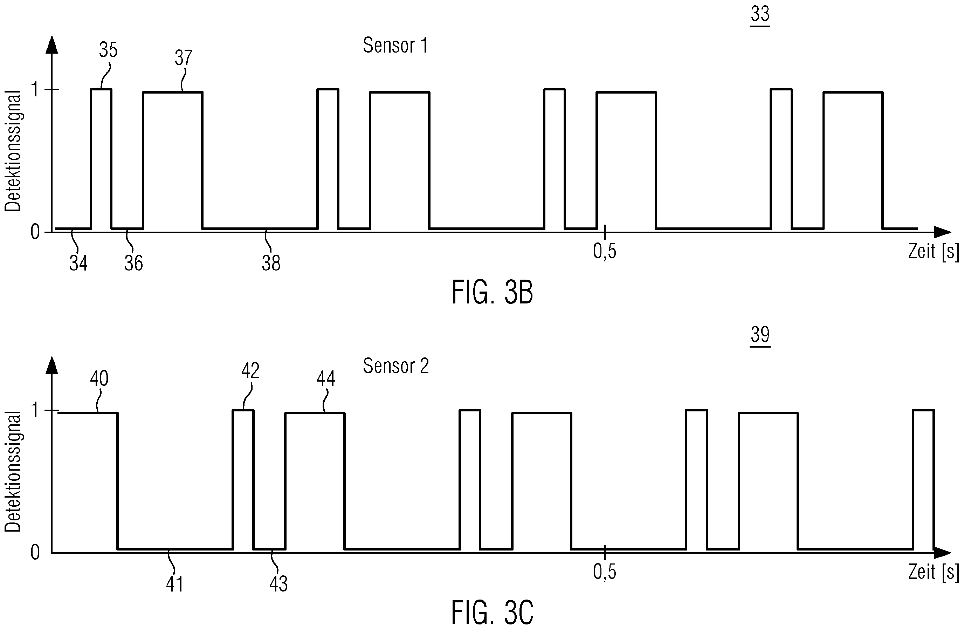

Die Figur 3B zeigt ein Detektionssignal-Zeit-Diagramm 33 des ersten Sensors 31 der Antriebsvorrichtung 23 bei Rechtsdrehung um die Drehachse 27. Exemplarisch wurde eine Antriebsvorrichtung 23 mit einem Schweißelektrodenfräswerkzeug angenommen, das beispielsweise eine Drehzahl in einem Bereich von 300 Umdrehungen pro Minute aufweisen kann. Entsprechend der Figur 3A passiert zunächst das erste metallische Element 29 und dann das zweite metallische Element 30 den ersten Sensor 31. In dem Detektionssignal-Zeit-Diagramm 33 entspricht ein Wert 0 (Null) des Detektionssignals, dass sich kein metallisches Element an dem ersten Sensor 31 vorbeibewegt hat, und ein Wert 1 (Eins) des Detektionssignals, dass sich ein metallisches Element 29, 30 an dem ersten Sensor 31 vorbeibewegt hat.

In dem dargestellten Detektionssignal-Zeit-Diagramm 33 weist das Detektionssignal 34 während einer ersten Zeitdauer, in der ein Teil des vierten Winkelbereichs β4 an dem Sensor 9 vorbeibewegt, den Wert Null auf. Während einer zweiten Zeitdauer, in der sich das erste metallische Element 29 mit dem ersten Winkelbereichs β1 an dem ersten Sensor 31 vorbeibewegt, weist das Detektionssignal 35 den Wert Eins auf. Während einer dritten Zeitdauer, in der sich der dritte Winkelbereich β3 an dem ersten Sensor 31 vorbeibewegt, weist das Detektionssignal 36 den Wert Null auf. Während einer vierten Zeitdauer, in der sich das zweite metallische Element 30 mit dem zweiten Winkelbereichs β2 an dem ersten Sensor 31 vorbeibewegt, weist das Detektionssignal 37 den Wert Eins auf. Während einer fünften Zeitdauer, in der sich der vierte Winkelbereich β4 an dem ersten Sensor 31 vorbeibewegt, weist das Detektionssignal 38 den Wert Null auf. Danach wiederholt sich der Ablauf.

Die Figur 3C zeigt ein Detektionssignal-Zeit-Diagramm 39 des zweiten Sensors 32 der Antriebsvorrichtung 23 bei der Rechtsdrehung um die Drehachse 27. Entsprechend der Figur 3A passiert zunächst das zweite metallische Element 30 und dann das erste metallische Element 29 den zweiten Sensor 32. In dem Detektionssignal-Zeit-Diagramm 39 entspricht ein Wert 0 (Null) des Detektionssignals, dass sich kein metallisches Element an dem zweiten Sensor 32 vorbeibewegt hat, und ein Wert 1 (Eins) des Detektionssignals, dass sich ein metallisches Element 29, 30 an dem zweiten Sensor 32 vorbeibewegt hat.

In dem dargestellten Detektionssignal-Zeit-Diagramm 39 weist das Detektionssignal 40 während einer ersten Zeitdauer, in der ein Teil des zweiten metallischen Elements 30 mit dem zweiten Winkelbereichs β2 an dem zweiten Sensor 32 vorbeibewegt, den Wert Eins auf. Während einer zweiten Zeitdauer, in der sich der vierte Winkelbereich β4 an dem zweiten Sensor 32 vorbeibewegt, weist das Detektionssignal 41 den Wert Null auf. Während einer dritten Zeitdauer, in der sich das erste metallische Element 29 mit dem ersten Winkelbereichs β1 an dem zweiten Sensor 32 vorbeibewegt, weist das Detektionssignal 42 den Wert Eins auf. Während einer vierten Zeitdauer, in der sich der dritte Winkelbereich β3 an dem zweiten Sensor 32 vorbeibewegt, weist das Detektionssignal 43 den Wert Null auf. Während einer fünften Zeitdauer, in der sich das zweite metallische Element 30 mit dem zweiten Winkelbereichs β2 an dem zweiten Sensor 32 vorbeibewegt, weist das Detektionssignal 44 den Wert Eins auf. Danach wiederholt sich der Ablauf.

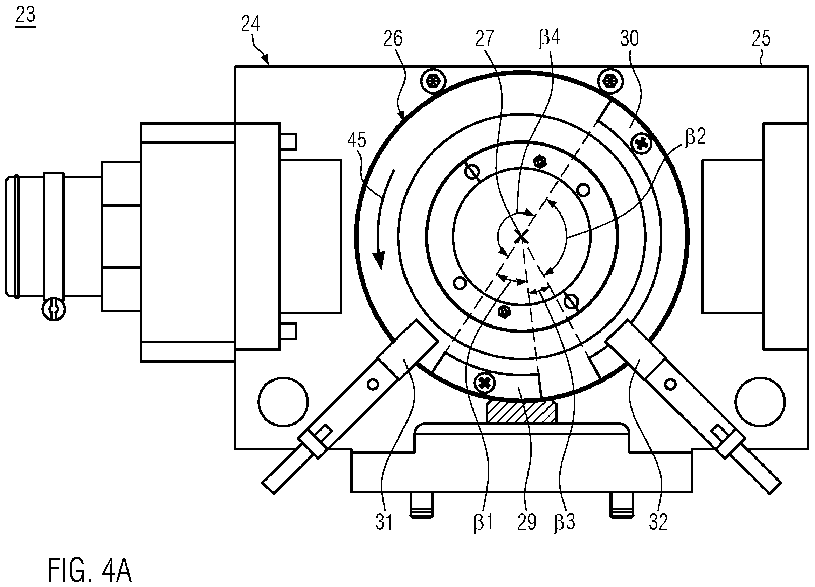

Die Figur 4A eine schematische Ansicht der zweiten Ausführungsform der Antriebsvorrichtung 23 für ein Schweißelektrodenfräswerkzeug oder ein Schweißelektrodenkappenwechslerwerkzeug, die bereits hinsichtlich der Figur 3A beschrieben wurde, bei Linksdrehung. Die Linksdrehung des Antriebsmotors 2 um die Drehachse 5 ist mittels des Pfeils 45 kenntlich gemacht.

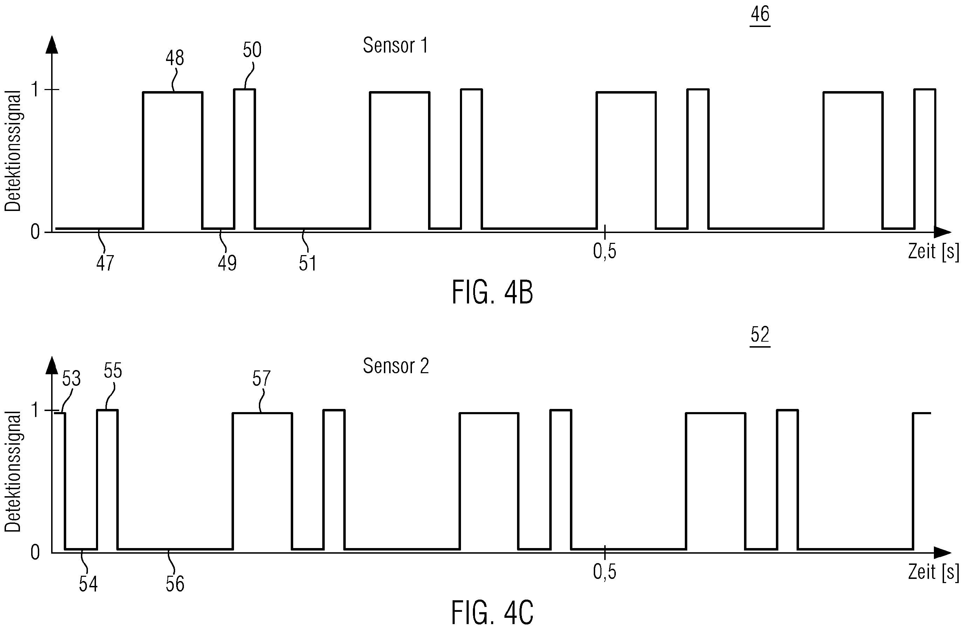

Die Figur 4B zeigt ein Detektionssignal-Zeit-Diagramm 46 des ersten Sensors 31 der Antriebsvorrichtung 23 bei Linksdrehung um die Drehachse 27. Exemplarisch wurde wieder, wie in der Figur 3B, eine Antriebsvorrichtung 23 mit einem Schweißelektrodenfräswerkzeug angenommen. Entsprechend der Figur 4A passiert zunächst das zweite metallische Element 30 und dann das erste metallische Element 29 den ersten Sensor 31.

In dem dargestellten Detektionssignal-Zeit-Diagramm 46 weist das Detektionssignal 47 während einer ersten Zeitdauer, in der sich ein Teil des vierten Winkelbereichs β4 an dem ersten Sensor 31 vorbeibewegt, den Wert Null auf. Während einer zweiten Zeitdauer, in der sich das zweite metallische Element 30 mit dem zweiten Winkelbereichs β2 an dem ersten Sensor 31 vorbeibewegt, weist das Detektionssignal 48 den Wert Eins auf. Während einer dritten Zeitdauer, in der sich der dritte Winkelbereich β3 an dem ersten Sensor 31 vorbeibewegt, weist das Detektionssignal 49 den Wert Null auf. Während einer vierten Zeitdauer, in der sich das erste metallische Element 29 mit dem ersten Winkelbereich β1 an dem ersten Sensor 31 vorbeibewegt, weist das Detektionssignal 50 den Wert Eins auf. Während einer fünften Zeitdauer, in der sich der vierte Winkelbereich β4 an dem ersten Sensor 31 vorbeibewegt, weist das Detektionssignal 51 den Wert Null auf. Danach wiederholt sich der Ablauf.

Die Figur 4C zeigt ein Detektionssignal-Zeit-Diagramm 52 des zweiten Sensors 32 der Antriebsvorrichtung 23 bei der Linksdrehung um die Drehachse 27. Entsprechend der Figur 4A passiert zunächst das zweite metallische Element 30 und dann das erste metallische Element 29 den zweiten Sensor 32.

In dem dargestellten Detektionssignal-Zeit-Diagramm 52 weist das Detektionssignal 53 während einer ersten Zeitdauer, in der sich ein Teil des zweiten metallischen Elements 30 mit dem zweiten Winkelbereichs β2 an dem zweiten Sensor 32 vorbeibewegt, weist das Detektionssignal 48 den Wert Eins auf. Während einer zweiten Zeitdauer, in der sich der dritte Winkelbereich β3 an dem zweiten Sensor 32 vorbeibewegt, weist das Detektionssignal 54 den Wert Null auf. Während einer dritten Zeitdauer, in der sich das erste metallische Element 29 mit dem ersten Winkelbereich β1 an dem zweiten Sensor 32 vorbeibewegt, weist das Detektionssignal 55 den Wert Eins auf. Während einer vierten Zeitdauer, in der sich der vierte Winkelbereich β4 an dem zweiten Sensor 32 vorbeibewegt, weist das Detektionssignal 56 den Wert Null auf. Während einer fünften Zeitdauer, in der sich das erste metallische Element 29 mit dem ersten Winkelbereich β1 an dem zweiten Sensor 32 vorbeibewegt, weist das Detektionssignal 50 den Wert Eins auf. Danach wiederholt sich der Ablauf.

## Patentansprüche

1. Antriebsvorrichtung (1, 23) für ein Schweißelektrodenkappenfräswerkzeug oder ein Schweißelektrodenkappenwechslerwerkzeug umfassend einen Antriebsmotor (2, 24), der eine Werkzeugaufnahme (4, 26) zur Aufnahme des Schweißelektrodenfräswerkzeugs oder des Schweißelektrodenkappenwechslerwerkzeugs umfasst,
**gekennzeichnet durch**
- zwei zueinander beabstandete, sich über verschieden große Bereiche in der Werkzeugaufnahme erstreckende metallische Elemente (7, 8, 29, 30), und
- mindestens einen Sensor (9, 31, 32) zur Detektion von den zwei sich bei Drehung des Antriebsmotors (2, 24) in eine Drehrichtung (6, 16, 28, 45) an dem mindestens einen Sensor (9, 31, 32) vorbeibewegenden metallischen Elementen (7, 8, 29, 30) und zur Ausgabe von Detektionssignalen (11, 12, 13, 14, 15, 18, 19, 20, 21, 22, 34, 35, 36, 37, 38, 40, 41, 42, 43, 44, 47, 48, 49, 50, 51, 53, 54, 55, 56, 57) basierend zumindest auf der Detektion.

2. Die Antriebsvorrichtung (1, 23) nach Anspruch 1, wobei die zwei metallischen Elemente (7, 8, 29, 30) entlang eines Kreisrings um die Werkzeugaufnahme (4, 26) des Antriebsmotors (2, 24) angeordnet sind, wobei beispielsweise die zwei metallischen Elemente (7, 8, 29, 30) sich über verschiedenen große Winkelbereiche (α1, α2, β1, β2) erstrecken.

3. Die Antriebsvorrichtung (1, 23) nach Anspruch 2, wobei eine Form der zwei metallischen Elemente (7, 8, 29, 30) jeweils einem Verlauf des Kreisrings entspricht.

4. Die Antriebsvorrichtung (1, 23) nach einem der Ansprüche 1 bis 3, wobei die Werkzeugaufnahme (4, 26) ein Zahnrad umfasst und wobei die zwei metallischen Elemente (7, 8, 29, 30) an einer Stirnseite des Zahnrads vorgesehen sind.

5. Die Antriebsvorrichtung (1, 23) nach Anspruch 4, wobei die zwei metallischen Elemente (7, 8, 29, 30) in Aussparungen der Stirnseite des Zahnrads eingepasst sind.

6. Die Antriebsvorrichtung (1, 23) nach einem der Ansprüche 1 bis 5, wobei die zwei metallischen Elemente (7, 8, 29, 30) jeweils Nockenschalter umfassen.

7. Die Antriebsvorrichtung (1, 23) nach einem der Ansprüche 1 bis 6, wobei der mindestens eine Sensor (9, 31, 32) als induktiver Sensor oder als Annäherungssensor ausgebildet ist.

8. Die Antriebsvorrichtung nach einem der Ansprüche 1 bis 7, wobei der mindestens eine Sensor (9, 31, 32) radial zur Werkzeugaufnahme (4, 26) angeordnet sind.

9. Die Antriebsvorrichtung (23) nach einem der Ansprüche 1 bis 8, wobei die Antriebsvorrichtung (23) zwei Sensoren (31, 32) umfasst.

10. Die Antriebsvorrichtung (23) nach Anspruch 9, wobei die beiden Sensoren (31, 32) zueinander einen Winkelabstand in einem Bereich zwischen 20° und 160° aufweisen.

11. Die Antriebsvorrichtung (1, 23) nach einem der Ansprüche 1 bis 10, wobei die Antriebsvorrichtung (1, 23) weiter eine Analysevorrichtung zur Auswertung der Detektionssignale und zum Ermitteln der Drehrichtung (6, 16, 28, 45) anhand einer zeitlichen Reihenfolge der aufeinanderfolgenden Detektionssignale umfasst.

12. Die Antriebsvorrichtung (1, 23) nach Anspruch 11, wobei die Analysevorrichtung ausgebildet ist, die ermittelte Drehrichtung (6, 16, 28, 45) mit einer vorgegebenen Solldrehrichtung zu vergleichen, um ein Vorliegen der vorgegebenen Solldrehrichtung oder ein Nicht-Vorliegen der vorgegebenen Sollvorrichtung des Antriebsmotors (2, 24) als Analyseergebnis auszugeben.

13. Die Antriebsvorrichtung (1, 23) nach Anspruch 11 oder 12, wobei die Analysevorrichtung zwei Ausgänge umfasst.

14. Die Antriebsvorrichtung (1, 23) nach Anspruch 13, wobei die Analysevorrichtung ausgebildet ist, anhand des Analyseergebnisses einen oder beide der zwei Ausgänge zu aktivieren oder zu deaktivieren.

15. Verfahren, unter Verwendung der Antriebsvorrichtung (1, 23) nach einem der Ansprüche 1 bis 14, zur Detektion von den zwei sich bei Drehung des Antriebsmotors (2, 24) in eine Drehrichtung (6, 16, 28, 45) an dem mindestens einen Sensor (9, 31, 32) vorbeibewegenden metallischen Elementen (7, 8, 29, 30) und zur Ausgabe von Detektionssignalen basierend zumindest auf der Detektion, wobei das Verfahren umfasst:
- Detektieren, mittels des mindestens einen Sensors (9, 31, 32), von den zwei sich bei Drehung des Antriebsmotors in eine Drehrichtung (6, 16, 28, 45) an dem mindestens einen Sensor (9, 31, 32) vorbeibewegenden metallischen Elementen (7, 8, 29, 30) und
- Ausgaben, mittels des mindestens einen Sensors (9, 31, 32), von Detektionssignalen basierend zumindest auf dem Detektieren.
